# EUROPEAN PATENT SPECIFICATION

(11) **EP 0 336 463 B1**
(45) Date of publication and mention of the grant of the patent: **20.01.1993**
(21) Application number: 89200503.4
(22) Date of filing: 01.03.1989
(51) Int. Cl.: A23L 1/317, A22C 7/00, B65D 85/76

(54) **Food product and process for the preparation of the same**
Nahrungsmittelprodukt und Verfahren zu seiner Zubereitung
Produit alimentaire et procédé pour sa préparation

(30) Priority: 09.03.1988 GB 8805640; 30.01.1989 GB 8902010
(43) Date of publication of application: 11.10.1989
(73) Proprietor: UNILEVER N.V., 3013 AL Rotterdam (NL); UNILEVER PLC, London EC4P 4BQ (GB)
(72) Inventor: McBride, Malcolm John, Nr Wellingborough Northants, NN9 5BA (GB); Symien, Serge Alfred, Bedford MK41 9BP (GB); Winser, Rowland William, Wellingborough Northants, NN9 6BJ (GB)
(74) Representative: Roscoe, Brian Corrie

(56) References cited:
- DE-B- 1 166 093
- DE-U- 6 926 639
- GB-A- 1 203 165
- GB-A- 1 335 597
- PATENT ABSTRACTS OF JAPAN, vol. 12, no. 358 (C-531)(3205), 26th September 1988; & JP-A-63 112 967 (Hokubii K.K.) 18-05-88

## Description

This invention relates to an elongate ribbon or strip of food material as well as to a process of preparing such an elongate ribbon or strip of food material, and to a process of preparing filled, edible products in which said elongate ribbons or strips of food materials are used.

In the manufacture of e.g. meat-based impulse foods, sometimes slices of meat are used as an outer wrapping material for a savoury core or filling. A problem is here that not all slices of meat have the same dimensions so that an uninterrupted process of producing such impulse foods is not guaranteed. Also such a process is cumbersome and uneconomical because of the required transport and handling of separate slices of meat, thus also appreciably reducing the speed of production of the impulse foods.

Finally, the length of a slice of meat may not be sufficient with larger impulse foods to cover the entire outer surface of a product unit if the slice of meat is wound around the impulse food product at an angle to the axial axis of the product.

There is therefore need of e.g. a sliced meat product of uniform dimension, preferably having the form of an elongate ribbon or strip. Particularly when producing meat-based or savoury impulse foods, such a product, when used as the outer wrapping material, will enable a highly economical speed of production of the impulse food product.

The present invention therefore relates to an elongate ribbon or strip of food material, which comprises a plurality of slices of food material in an edge-overlapping or shingled relationship, the area of the overlap of two adjacent slices of food material being at most 90% of the total area of each slice of food material. The slices of food material may also be combined like a bonding pattern of bricks and particularly in a running bond pattern, a 1/3 running bond pattern or even a 1/10 running bond pattern (in which cases the area of the overlap between adjacent slices of the first layer and of the second layer are respectively about 50%, about 33.3% and about 10% of the total area of each slice of food material, assuming that all slices are of equal size). In these combinations or bonding patterns, but also in the shingled or edge-overlapping relationship, the slices of food material may all be of the same material or may constitute any combination of slices of different types of food material. If the slices of food material are combined like a bonding pattern of bricks, usually two layers of slices of food material are used, but depending on the thickness of the slices, more than two layers or courses of food slices may be used. If the slices of food material are rather thin (e.g. have a thickness of about 1.0 mm), then the minimum amount of layers is two. If the slices of food material are combined like a bonding pattern of bricks, the area of the overlap is considered between adjacent slices of food material of the underlayer and of the next layer. The area of the overlap is then from 10% to 100% of the total area of each slice of food material.

The slices of food material may be meat, such as meat of mammals, like beef, pork or lamb meat, and poultry meat, like chicken and turkey, but may also be of dairy material, like cheese. Also combinations of these two and any other types of food material may be used, provided that the other types of food material are sliceable and have sufficient mechanical strength and coherence to be used as a wrapping material for impulse foods.

The meat may be at least partially cooked or fresh meat and can have been subjected to pre-treatments, like tendering, ageing, injecting, marinading, and the like. The meat may also be mixed with other edible materials. In this latter case, slices of meat obtained from thermally set pieces of meat comminutes, restructured meat or recombined pieces of meat, optionally mixed with vegetables, vegetable proteins, fungal proteins, caseinate, dairy products, herbs, spices, emulsifiers, curing agents, flavouring agents, colouring agents, antioxidants, and the like, may be used.

In a preferred embodiment of the present invention, the area of the overlap between two adjacent (both in horizontal and vertical sense) slices of food material is provided with an innocuous adhesive. The innocuous adhesive, which may be applied at least partially onto the area of the overlap between two adjacent slices of food material, preferably is selected from the proteinaceous adhesives, like finely ground meat dispersions, gelatin, vegetable or animal protein, like fish protein, fungal protein, egg material, protein concentrates and protein isolates, like whey protein isolate. Also carbohydrate-based adhesives, like agar-agar, carrageenan, and the like materials may be used. The adhesive may also comprise colouring and flavouring materials. Usually, however, the natural juices of the meat as food material are sufficient to effect a suitable adhesion between the overlapping slices of meat, and the elongate ribbon or strip of food material without an innocuous adhesive is preferred.

The area of the overlap between two adjacent slices of food material in the edge-overlapping or shingled relationship is preferably at most 50% of the total area of each slice of food material; particularly this area is at most 15% and most preferably this area of the overlap is at most 10% of the total area of each slice of food material.

The present invention also relates to a process for the preparation of an elongate ribbon or strip of food material, which is characterized by the fact that slices of food material are brought into an edge-overlapping or shingled relationship by means of a lower endless belt and an upper, horizontally movable, endless belt fed with slices of food material, the linear speed of the lower endless belt and the linear speed of the upper endless belt and its deplacement in the horizontal plane being adjusted and interrelated such that each slice of food material travelling by the upper endless belt is deposited in an edge-overlapping or shingled position on its preceding slice of food material travelling by the lower endless belt.

Preferably, in the process according to the present invention, before the two slices of food material are brought into an edge-overlapping or shingled relationship to each other, the area of the overlap between the two adjacent slices of food material is provided with an innocuous adhesive, preferably a proteinaceous adhesive.

In a preferred process for the preparation of an elongate ribbon or strip of food material according to the present invention, a slicing device for food material is feeding a slice of food material onto an upper, horizontally movable, endless transport belt, which is then moved in a horizontal plane towards a lower endless depositing belt until the leading edge of the slice of food material on the endless transport belt is extending over the rear edge of its preceding slice of food material travelling by the lower endless depositing belt, the upper endless transport belt being moved back in a horizontal plane towards the slicing device for food material, once the overlapping contact between the two slices of food material has been made, to receive the next slice of food material.

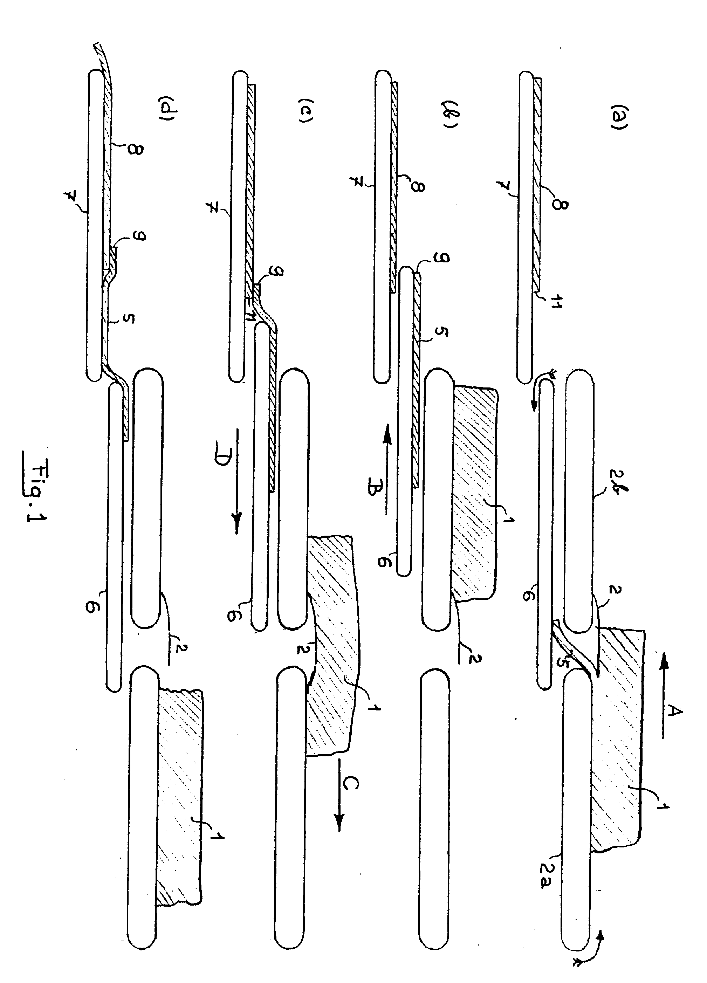

The process according to the present invention will now be further described in Fig. 1.

A log of food material, e.g. meat (1), is passed over a slicing device (2) from the right-hand side to the left-hand side by means of log carrying devices (2a,2b) (indicated by the arrow A in Fig. 1(a)). Whilst the slice of food material (5) is being formed, it is deposited on a travelling, endless transport belt (6), the speed of which is matched at this time to the speed of the log carrying device (2a). The length of the endless transport belt (6) is sufficient to hold the slice of food material (5) laid flat. Subsequently, the upper endless transport belt (6) is moved in a horizontal plane in the direction of a lower endless depositing belt (7) on which its preceding slice of food material (8) has been deposited (indicated by arrow B in Fig. 1(b)). The endless depositing belt (7) is moving considerably slower than the endless transport belt. Meanwhile the log of food material (1) is now moving backwards (indicated by the arrow C in Fig. 1(c)). If the leading edge (9) of the slice of food material (5) is extending over the rear edge (11) of the slice of food material (8), the slice (5) is deposited in an edge-overlapping or shingled relationship with the slice of food material (8) on this slice (8). The endless transport belt (6) is now moved in the horizontal plane in the opposite direction (indicated by arrow D in Fig. 1(c)) until the original position, as indicated in Fig. 1(a), has been reached again (Fig. 1(d)). The log of food material (1) then starts to move in the left-hand direction again (indicated by arrow A in Fig. 1(a)) and the sequence of operations, as described hereinbefore, starts again. The linear speed of the endless transport belt (6), the linear speed of the lower endless depositing belt (7) and the horizontal displacement of the upper endless transport belt (6) are adjusted and interrelated in a way such that the two adjacent slices of food material (8) and (5) are deposited on one another in an edge-overlapping or shingled relationship, as shown in Fig. 1(c) and 1(d).

In another embodiment of the process according to the present invention, the endless transport belt (6) is of the shuttle type and the left-hand end is pushed out with sufficient speed to overtake the trailing or rear edge (11) of the preceding slice of food material (8). At the same time, the conveyor device (not shown) of the endless transport belt (6) is maintained at its high speed to ensure that the leading edge (9) of the new slice of food material (5) also overtakes the preceding slice (8). The endless transport belt (6) then stops. On receipt of a signal from a sensor (not shown) on the endless depositing belt (7), the endless transport belt (6) starts up again, but at a speed matching that of the endless depositing belt (7). The timing of this signal is arranged such that there is a slight overlap of the two slices of food material (5) and (8). At the same time, the shuttle end of the endless transport belt (6) retracts slowly so that it arrives at its limit of travel just before the end of the slice of food material (5) is deposited. Also simultaneously, the log carrying devices (2a, 2b) reverse in travelling direction to position the log of food material (1) on the log carrying device (2a) without producing another slice.

In Figure 1 a single system for depositing elongate slices of food material onto an endless depositing belt (7) has been shown. By extending this depositing belt (7) much further to the right and duplicating the slicing device (2), it is possible to form an endless elongate ribbon comprising a plurality of slices of food material, combined like a bonding pattern of bricks.

By adjusting the relative lateral positions of the slicing devices (2), the overlap between the adjacent slices can be varied from 10% to 100% of the total area of each food material slice. The bonding pattern can be varied according to requirements by adjusting the position and synchronisation of the two slice depositing systems.

In an application, a first slicing device (2) is used to produce elongate ribbons of chicken loaf, the dimensions of which are 7 cm long x 50 cm wide x 0.1 cm thick. These slices are deposited in the manner described before onto endless depositing belt (7). A second slicing device (2′) is used to produce elongate ribbons of ham, the dimensions of which are 8.5 cm long x 50 cm wide x 0.1 cm thick. These slices are deposited on top of the chicken loaf slices such that the overlap is 1.5 cm. When the combined elongate strips of both types of meat were wound around a savoury core, the visible parts of each slice of meat were of equal width (7 cm).

Any suitable slicing device for food material can be used, provided that a regular delivery of slices of food material takes place so that an economically acceptable speed of operation is guaranteed. The endless belts may be of any suitable material. Optionally an innocuous adhesive may be applied on to the area of the overlap between the two adjacent slices of food material (8) and (5). This may take place until the situation depicted in Fig. 1(c) has been reached and this can be effected in any suitable way. The slices of food material (8) and (5) may have any desired dimensions. In practice, dimensions of, for example, about 7 cm x about 50 cm have been found to be satisfactory, the required dimensions generally being dependent on the final use of the elongate ribbon or strip of food material obtained.

The present invention also relates to a method of preparing filled, edible products, in which slices of food material are brought into an edge-overlapping or shingled relationship or are combined like a bonding pattern of bricks so as to form a continuous strip or elongate ribbon of food material, in uniform lengths of which a filling material is enclosed. In this method, different types of food material may be used. The food material preferably is selected from meat of mammals, poultry meat, fish meat, dairy material, like cheese, and mixtures thereof.

In this method, the area of the overlap of two adjacent slices of food material in the edge-overlapping or shingled relationship is at most 90% of the total area of each slice of food material and, if the slices of food material are combined like a bonding pattern of bricks, the area of the overlap between adjacent slices of food material of the underlayer and the adjacent, next layer is from 10 to 100% of the total area of each slice of food material.

The area of the overlap between two slices of food material is provided with an innocuous adhesive, preferably a proteinaceous adhesive, like finely ground meat dispersion.

The filling material may be a dairy-type filling, a vegetable filling, or a savoury-type filling, or combinations of fillings of this type. The filling material is preferably a savoury filling, more preferably a meat-based material, which may comprise mammal meat, poultry meat and/or fish meat, vegetable protein, fungal protein, caseinate, but also vegetables, spices, herbs, flavouring agents, colouring agents and the like. The filling may also comprise single vegetables or mixtures of vegetables including mushrooms. The dairy-type filling may comprise cheese or egg, but also fruit fillings may be used. The filling may be solid and pre-formed, like e.g. individual sausages, or round pieces of cheese, or the filling may be soft or semi-solid.

Preferably after its formation, the filled, edible product is cut into uniform required lengths and these lengths may be packaged into any suitable type of packaging, in which a single pack may contain different types of filled, edible products with regard to the filling material and/or the continuous strip or ribbon of food material.

Finally, the present invention also relates to a filled, edible product comprising a wrapper of a continuous strip or elongate ribbon of food material consisting of (a) slices of food material brought into an edge-overlapping or shingled relationship, the area of the overlap of two adjacent slices of food material being at most 90% of the total area of each slice of food material, or (b) slices of food material combined like a bonding pattern of bricks, the area of the overlap between a slice of food material of the underlayer and an adjacent slice of food material of the next layer being from 10% to 100% of the total area of each slice of food material, said wrapper enclosing a filling material. Preferably, different food materials are used and, more preferably, the food material is selected from the group consisting of : meat, dairy material, and mixtures thereof. The area of the overlap is provided with an innocuous adhesive, preferably a proteinaceous adhesive, like finely ground meat dispersion. The filling material is selected from the group consisting of : dairy-type filling, vegetable filling, savoury-type filling, and mixtures thereof. The filling may also be a pre-formed, solid food material, like sausage or shaped cheese.

## Claims

1. A process for the preparation of an elongate ribbon or strip of food material, characterized in that slices of food material are brought into an edge-overlapping or shingled relationship by means of a lower endless belt and an upper, horizontally movable, endless belt fed with slices of food material, the linear speed of the lower endless belt and the linear speed of the upper endless belt and its displacement in the horizontal plane being adjusted and interrelated in a way such that each slice of food material travelling by the endless upper belt is deposited in an edge-overlapping or shingled position on its preceding slice of food material travelling by the lower endless belt.

2. A process for the preparation of an elongate ribbon or strip of food material, in which a slicing device (2) for food material is feeding a slice of food material (5) onto an upper, horizontally movable, endless transport belt (6), which is then moved in a horizontal plane towards a lower endless depositing belt (7) until the leading edge (9) of the slice of food material (5) on the endless transport belt (6) is extending over the rear edge (11) of the preceding slice of food material (8) travelling by the lower endless depositing belt (7), after which the slice of food material (5) is deposited in an edge-overlapping or shingled relationship with the slice of food material (8) on lower belt (7), the upper endless transport belt (6) being moved back in the horizontal plane towards the slicing device (2) for food material, once the overlap between the two slices of food material (8) and (5) has been formed, to receive the next slice of food material.

3. A process according to Claim 1 or 2, in which the upper, horizontally movable, endless belt is of the shuttle type.

4. A process according to Claims 1-3, in which the area of the overlap of the preceding slice of food material travelling by the lower endless depositing belt is provided with an innocuous adhesive before the next slice of food material is deposited thereon in an edge-overlapping or shingled position.

5. A process according to Claim 1 or 2, in which two slicing devices (2) are used, of which the relative lateral positions can be varied, in co-operation with an endless transport belt (6) and an endless depositing belt (7).

6. A method of preparing filled, edible products, characterized in that slices of food material are brought into an edge-overlapping or shingled relationship or are combined like a bonding pattern of bricks so as to form a continuous strip or elongate ribbon of food material, in uniform lengths of which a filling material is enclosed.

7. A method according to Claim 6, characterized in that different types of food material are used.

8. A method according to Claim 6 or 7, in which the food material is selected from the group consisting of meat, dairy material, and mixtures thereof.

9. A method according to Claims 6-8, characterized in that the area of the overlap of two adjacent slices of food material in the edge-overlapping or shingled relationship is at most 90% of the total area of each slice of food material.

10. A method according to Claims 6-8, characterized in that the area of the overlap between adjacent slices of food material of the underlayer and the adjacent layer in the combination of slices of food material like a bonding pattern of bricks is from 10% to 100% of the total area of each slice of food material.

11. A method according to Claims 6-10, characterized in that the area of overlap is provided with an innocuous adhesive.

12. A method according to Claim 11, in which the innocuous adhesive is a proteinaceous adhesive.

13. A method according to Claim 11, in which the innocuous adhesive comprises a flavouring and/or a colouring material.

14. A method according to Claims 6-13, characterized in that the filling material is selected from the group consisting of dairy-type filling, vegetable filling, savoury-type filling, and mixtures thereof.

15. A method according to Claim 14, characterized in that the filling material is a pre-formed solid.

16. A method according to Claims 6-15, characterized in that, after its formation, the filled, edible product is cut into uniform lengths.

17. A filled, edible product comprising a wrapper of a continuous strip or elongate ribbon of food material consisting of (a) slices of food material brought into an edge-overlapping or shingled relationship, the area of the overlap of two adjacent slices of food material being at most 90% of the total area of each slice of food material, or (b) slices of food material combined like a bonding pattern of bricks, the area of the overlap between a slice of food material of the underlayer and an adjacent slice of food material of the next layer being from 10% to 100% of the total area of each slice of food material, said wrapper enclosing a filling material.

18. A filled, edible product according to Claim 17, comprising different food materials.

19. A filled, edible product according to Claim 17 or 18, in which the food material is selected from the group consisting of meat, dairy material, and mixtures thereof.

20. A filled, edible product according to Claims 17-19, in which the area of overlap is provided with an innocuous adhesive.

21. A filled, edible product according to Claim 20, in which the innocuous adhesive is a proteinaceous adhesive.

22. A filled, edible product according to Claim 20, in which the innocuous adhesive comprises a flavouring and/or a colouring material.

23. A filled, edible product according to Claims 17-22, characterized in that the filling material is selected from the group consisting of dairy-type filling, vegetable filling, savoury-type filling, and mixtures thereof.

24. A filled, edible product according to Claims 17-23, characterized in that the filling material is pre-formed solid.

## Patentansprüche

1. Verfahren zur Herstellung eines länglichen Bandes oder Streifens aus Nahrungsmittelmaterial, dadurch gekennzeichnet, daß Scheiben aus Nahrungsmittelmaterial mittels eines unteren endlosen Bandes und eines oberen, horizontal bewegbaren, endlosen Bandes, dem Scheiben aus Nahrungsmittelmaterial zugeführt werden, in eine randüberlappende oder schindelartige Relation gebracht werden, wobei die lineare Geschwindigkeit des unteren endlosen Bandes und die lineare Geschwindigkeit des oberen endlosen Bandes und dessen Versetzung in der horizontalen Ebene solcherart eingestellt und aufeinander abgestimmt werden, daß jede Scheibe des Nahrungsmittelmaterials, die durch das obere endlose Band wandert, in einer randüberlappenden oder schindelartigen Lage auf die ihr vorausgehende Scheibe aus Nahrungsmittelmaterial, welche auf dem unteren endlosen Band wandert, abgelegt wird.

2. Verfahren zur Herstellung eines länglichen Bandes oder Streifens aus Nahrungsmittelmaterial, bei welchem Verfahren eine Schneideinrichtung (2) für Nahrungsmittelmaterial eine Scheibe aus Nahrungsmittelmaterial (5) auf ein oberes, horizontal bewegbares endloses Transportband (6) zuführt, die dann in einer horizontalen Ebene zu einem unteren endlosen Ablegeband (7) bewegt wird, bis der vorauslaufende Rand (9) der Scheibe aus Nahrungsmittelmaterial (5) am endlosen Transportband (6) über den hinteren Rand (11) der vorausgehenden Scheibe aus Nahrungsmittelmaterial (8) ragt, welche durch das untere endlose Ablegeband (7) wandert, wonach die Scheibe aus Nahrungsmittelmaterial (5) in randüberlappender oder schindelartiger Relation hinsichtlich der am unteren Band (7) befindlichen Scheibe aus Nahrungsmittelmaterial (8) abgelegt wird, wobei das obere endlose Transportband (6) in der horizontalen Ebene zur Schneideinrichtung (2) für Nahrungsmittelmaterial hin zurückbewegt wird, sobald die Überlappung zwischen den zwei Scheiben aus Nahrungsmittelmaterial (8) und (5) gebildet worden ist, um die nächste Scheibe aus Nahrungsmittelmaterial aufzunehmen.

3. Verfahren nach Anspruch 1 oder 2, bei dem das obere, horizontal bewegbare, endlose Band reversierbar ist.

4. Verfahren nach den Ansprüchen 1 bis 3, bei dem der Bereich der Überlappung der vorausgehenden Scheibe aus Nahrungsmittelmaterial, welche durch das untere endlose Ablegeband wandert, mit einem unschädlichen Klebstoff versehen wird, bevor die nächste Scheibe aus Nahrungsmittelmaterial darauf in randüberlappender oder schindelartiger Lage abgelegt wird.

5. Verfahren nach Anspruch 1 oder 2, bei dem zwei Schneideinrichtungen (2), deren seitliche Relativlage veränderbar ist, in Zusammenarbeit mit einem endlosen Transportband (6) und einem endlosen Ablegeband (7) verwendet werden.

6. Verfahren zur Herstellung gefüllter Nahrungsmittelprodukte, dadurch gekennzeichnet, daß Scheiben aus Nahrungsmittelmaterial in randüberlappende oder schindelartige Relation gebracht werden oder Ziegelverband-artig kombiniert werden, um einen kontinuierlichen Streifen oder ein längliches Band aus Nahrungsmittelmaterial zu bilden, wobei in gleichmäßige Längenabschnitte desselben ein Füllmaterial eingeschlossen wird.

7. Verfahren nach Anspruch 6, dadurch gekennzeichnet, daß verschiedene Arten von Nahrungsmittelmaterial verwendet werden.

8. Verfahren nach Anspruch 6 oder 7, bei dem das Nahrungsmittelmaterial aus der aus Fleisch, Molkereiprodukten und Mischungen hiervon bestehenden Gruppe ausgewählt wird.

9. Verfahren nach den Ansprüchen 6 bis 8, dadurch gekennzeichnet, daß der Bereich der Überlappung von zwei in der randüberlappenden oder schindelartigen Relation aneinanderliegenden Scheiben aus Nahrungsmittelmaterial höchstens 90% der Gesamtfläche jeder Scheibe aus Nahrungsmittelmaterial beträgt.

10. Verfahren nach den Ansprüchen 6 bis 8, dadurch gekennzeichnet, daß der Bereich der Überlappung zwischen aneinanderliegenden Scheiben aus Nahrungsmittelmaterial der Unterschicht und der daranliegenden Schicht in der Ziegelverband-artigen Kombination von Scheiben aus Nahrungsmittelmaterial 10% bis 100% der Gesamtfläche jeder Scheibe aus Nahrungsmittelmaterial beträgt.

11. Verfahren nach den Ansprüchen 6 bis 10, dadurch gekennzeichnet, daß der Überlappungsbereich mit einem unschädlichen Klebstoff versehen wird.

12. Verfahren nach Anspruch 11, bei dem der unschädliche Klebstoff ein proteinischer Klebstoff ist.

13. Verfahren nach Anspruch 11, bei dem der unschädliche Klebstoff ein aromatisierendes und/oder färbendes Material enthält.

14. Verfahren nach den Ansprüchen 6 bis 13, dadurch gekennzeichnet, daß das Füllmaterial aus der Molkereiproduktfüllungen, Gemüsefüllungen, Pikantfüllungen und Mischungen hiervon enthaltenden Gruppe ausgewählt wird.

15. Verfahren nach Anspruch 14, dadurch gekennzeichnet, daß das Füllmaterial ein vorgeformter Feststoff ist.

16. Verfahren nach den Ansprüchen 6 bis 15, dadurch gekennzeichnet, daß das gefüllte Nahrungsmittelprodukt nach seiner Bildung in gleichmäßige Längenabschnitte geschnitten wird.

17. Gefülltes Nahrungsmittelprodukt mit einer Hülle aus einem kontinuierlichen Streifen oder einem länglichen Band aus Nahrungsmittelmaterial, welche aus
a) Scheiben aus Nahrungsmittelmaterial, welche in randüberlappende oder schindelartige Relation gebracht sind, wobei der Bereich der Überlappung von zwei aneinanderliegenden Scheiben höchstens 90% der Gesamtfläche jeder Scheibe aus Nahrungsmittelmaterial beträgt, oder
b) Scheiben aus Nahrungsmittelmaterial, welche Ziegelverband-artig kombiniert sind, wobei der Bereich der Überlappung zwischen einer Scheibe aus Nahrungsmittelmaterial der Unterschicht und einer daranliegenden Scheibe aus Nahrungsmittelmaterial der nächsten Schicht zwischen 10% und 100% der Gesamtfläche jeder Scheibe aus Nahrungsmittelmaterial beträgt, besteht, welche Hülle ein Füllmaterial umschließt.

18. Gefülltes Nahrungsmittelprodukt nach Anspruch 17, welches verschiedene Nahrungsmittelmaterialien enthält.

19. Gefülltes Nahrungsmittelprodukt nach Anspruch 17 oder 18, bei dem das Nahrungsmittelmaterial aus der aus Fleisch, Molkereiprodukten und Mischungen hiervon bestehenden Gruppe ausgewählt wird.

20. Gefülltes Nahrungsmittelprodukt nach den Ansprüchen 17 bis 19, bei dem der Überlappungsbereich mit einem unschädlichen Klebstoff versehen ist.

21. Gefülltes Nahrungsmittelprodukt nach Anspruch 20, bei dem der unschädliche Klebstoff ein proteinischer Klebstoff ist.

22. Gefülltes Nahrungsmittelprodukt nach Anspruch 20, bei dem der unschädliche Klebstoff ein aromatisierendes und/oder färbendes Material enthält.

23. Gefülltes Nahrungsmittelprodukt nach den Ansprüchen 17-22, dadurch gekennzeichnet, daß das Füllmaterial aus der Molkereiproduktfüllungen, Gemüsefüllungen, Pikantfüllungen und Mischungen hiervon enthaltenden Gruppe ausgewählt wird.

24. Gefülltes Nahrungsmittelprodukt nach den Ansprüchen 17-23, dadurch gekennzeichnet, daß das Füllmaterial ein vorgeformter Feststoff ist.

## Revendications

1. Processus pour la préparation d'un ruban allongé ou d'une bande de matière alimentaire, caractérisée en ce que des tranches de matière alimentaire sont amenées en relation de superposition de bords ou de recouvrement au moyen d'une bande sans fin inférieure et d'une bande sans fin supérieure, mobile horizontalement, portant des tranches de matière alimentaire, la vitesse linéaire de la bande sans fin inférieure et la vitesse linéaire de la bande sans fin supérieure et son déplacement dans le plan horizontal étant réglés et interconnectés de façon telle que chaque tranche de matière alimentaire transportée par la bande sans fin supérieure soit déposée dans une disposition de superposition de bords ou de recouvrement sur la tranche de matière alimentaire qui la précède transportée par la bande sans fin inférieure.

2. Processus pour la préparation d'un ruban allongé ou d'une bande de matière alimentaire, dans lequel un dispositif de découpage en tranches (2) pour une matière alimentaire fournit une tranche de matière alimentaire (5) sur une bande sans fin de transport supérieure, mobile horizontalement (6), qui est ensuite déplacée dans un plan horizontal vers une bande sans fin inférieure de dépôt (7) jusqu'à ce que le bord avant (9) de la tranche de matière alimentaire (5) sur la bande sans fin de transport (6) s'étende sur le bord arrière (11) de la tranche précédente de matière alimentaire (8) transportée par la bande sans fin inférieure de dépôt (7), après quoi la tranche de matière alimentaire (5) est déposée dans une relation de superposition de bords ou de recouvrement avec la tranche de matière alimentaire (8) sur la bande inférieure (7), la bande sans fin de transport supérieure (6) étant ramenée dans le plan horizontal vers le dispositif de découpage en tranches (2) pour matière alimentaire, une fois que le chevauchement entre les deux tranches de matière alimentaire (8) et (5) a été réalisé, pour recevoir la nouvelle tranche de matière alimentaire.

3. Processus selon la revendication 1 ou 2, dans lequel la bande sans fin supérieure, mobile horizontalement, est du type à va-et-vient.

4. Processus selon les revendications 1-3, dans lequel la surface du chevauchement de la tranche de matière alimentaire précédente transportée par la bande sans fin de dépôt inférieure est munie d'une matière adhésive inoffensive avant que la tranche voisine de matière alimentaire ne soit déposée sur elle dans une disposition de superposition de bords ou de recouvrement.

5. Processus selon la revendication 1 ou 2, dans lequel deux dispositifs de découpage de tranches (2) sont utilisés, dont les positions latérales relatives peuvent être modifiées, en coopération avec une bande sans fin de transport (6) et une bande sans fin de dépôt (7).

6. Procédé de préparation de produits comestibles garnis, caractérisé en ce que des tranches de matière alimentaire sont amenées en relation de superposition de bords ou de recouvrement ou sont combinées comme un modèle d'assemblage de briques de façon à former une bande continue ou un ruban allongé de matière alimentaire, en longueurs uniformes dans lesquelles une matière de remplissage est enfermée.

7. Procédé selon la revendication 6, caractérisé en ce que divers types de matière alimentaire sont utilisés.

8. Procédé selon la revendication 6 ou 7, dans lequel la matière alimentaire est choisie à partir du groupe composé de viande, produit laitier, et leurs mélanges.

9. Procédé selon les revendications 6-8, caractérisé en ce que la surface du chevauchement de deux tranches adjacentes de matière alimentaire dans la relation de superposition de bords ou de recouvrement est au plus 90 % de la surface totale de chaque tranche de matière alimentaire.

10. Procédé selon les revendications 6-8, caractérisé en ce que la surface du chevauchement entre des tranches adjacentes de matière alimentaire de la couche de dessous et de la couche adjacente dans la combinaison des tranches de matière alimentaire comme un modèle d'assemblage de briques est de 10 % à 100 % de la surface totale de chaque tranche de matière alimentaire.

11. Procédé selon les revendications 6-10, caractérisé en ce que la surface de chevauchement est munie d'un produit adhésif inoffensif.

12. Procédé selon la revendication 11, dans lequel l'adhésif inoffensif est un produit à base de protéines.

13. Procédé selon la revendication 11, dans lequel l'adhésif inoffensif comporte une matière odoriférante et/ou colorante.

14. Procédé selon les revendications 6-13, caractérisé en ce que la matière de remplissage est choisie à partir du groupe constitué de garniture du type produit laitier, garniture de légume, garniture de type aromatique, et leurs mélanges.

15. Procédé selon la revendication 14, caractérisé en ce que la matière de remplissage est un solide préformé.

16. Procédé selon les revendications 6-15, caractérisé en ce que, après sa formation, le produit comestible garni est coupé en longueurs uniformes.

17. Produit comestible garni comprenant un enrobage fait d'une bande continue ou d'un ruban allongé de matière alimentaire constitué de (a) tranches de matière alimentaire amenées dans une relation de superposition de bords ou de recouvrement, la surface du chevauchement de deux tranches adjacentes de matière alimentaire étant au plus 90 % de la surface totale de chaque tranche de matière alimentaire, ou (b) de tranches de matière alimentaire combinées comme un modèle d'assemblage de briques, la surface du chevauchement entre une tranche de matière alimentaire de la couche de dessous et une tranche voisine de matière alimentaire de la couche suivante étant de 10 % à 100 % de la surface totale de chaque tranche de matière alimentaire, ledit enrobage entourant une matière de remplissage.

18. Produit comestible garni selon la revendication 17, comprenant diverses matières alimentaires.

19. Produit comestible garni selon la revendication 17 ou 18, dans lequel la matière alimentaire est choisie à partir du groupe constitué de viande, produit laitier, et leurs mélanges.

20. Produit comestible garni selon les revendications 17-19, dans lequel la surface de chevauchement est munie d'un produit adhésif inoffensif.

21. Produit comestible garni selon la revendication 20, dans lequel le produit adhésif inoffensif est un adhésif à base de protéines.

22. Produit comestible garni selon la revendication 20, dans lequel le produit adhésif inoffensif comprend une matière odoriférante et/ou colorante.

23. Produit comestible garni selon les revendications 17-22, caractérisé en ce que la matière de remplissage est choisie à partir du groupe constitué de garniture de type produit laitier, garniture de légumes, garniture de type aromatique, et leurs mélanges.

24. Produit comestible garni selon les revendications 17-23, caractérisé en ce que la matière de remplissage est un solide préformé.
